# EUROPEAN PATENT SPECIFICATION

(11) **EP 0 519 468 B1**
(45) Date of publication and mention of the grant of the patent: **07.09.1994**
(21) Application number: 92110305.7
(22) Date of filing: 17.06.1992
(51) Int. Cl.: C03B 37/014

(54) **Apparatus for supporting article in heating furnace**
Vorrichtung zum Tragen eines Gegenstandes in einem Heizofen
Appareil pour supporter un objet dans un four de chauffage

(30) Priority: 19.06.1991 JP 147269/91; 27.11.1991 JP 312245/91
(43) Date of publication of application: 23.12.1992
(73) Proprietor: SUMITOMO ELECTRIC INDUSTRIES, LIMITED, Osaka 541 (JP)
(72) Inventor: Saito, Tatsuo, c/o Yokohama Works of Sumitomo, Yokohama-shi, Kanagawa-ken (JP); Kobayashi, Kohei, c/o Yokohama Works of Sumitomo, Yokohama-shi, Kanagawa-ken (JP); Takata, Kouji, c/o Yokohama Works of Sumitomo, Yokohama-shi, Kanagawa-ken (JP); Ohga, Yuichi, c/o Yokohama Works of Sumitomo, Yokohama-shi, Kanagawa-ken (JP); Sato, Hikaru, c/o Yokohama Works of Sumitomo, Yokohama-shi, Kanagawa-ken (JP)
(74) Representative: Füchsle, Klaus, Dipl.-Ing.

(56) References cited:
- PATENT ABSTRACTS OF JAPAN vol. 16, no. 29 (C-904)24 January 1992 & JP-A-03 242 339 (Fujikura ltd.) 29 October 1991. *abstr;fig.12*
- PATENT ABSTRACTS OF JAPAN vol. 15, no. 128 (C-818)28 March 1991 & JP-A-03 012 336 (Fujikura Ltd.) 21 January 1991. *abstr;Fig.1-3)*
- PATENT ABSTRACTS OF JAPAN vol. 14, no. 417 (C-756)10 September 1990 & JP-A-02 160 636 (Sumitomo Electric Ind.Ltd.) 20 June 1990. *Abstr; fig.1,3)*
- PATENT ABSTRACTS OF JAPAN vol. 12, no. 139 (C-491)27 April 1988 & JP-A-62 256 735 (Hitachi Cable Ltd.)9 November 1987. *Abstr;Fig.1,2)*

## Description

### BACKGROUND OF THE INVENTION

The present invention relates to an apparatus for suspending a starting member from a rotary shaft so as to support the starting member, which is used at the time of manufacture of glass preform suitable for production of an optical fiber.

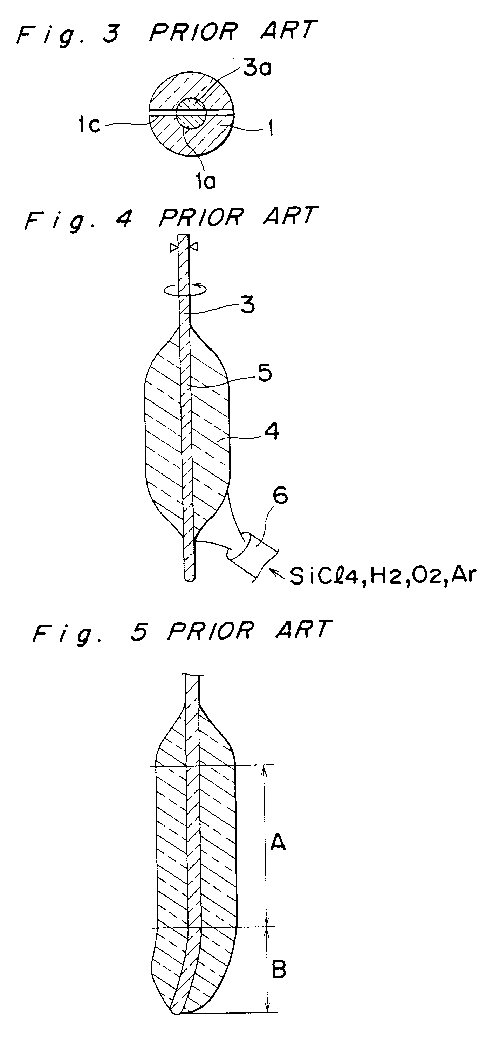

For production of the optical fiber, VAD (vapor phase axial deposition) method is known. Fig. 4 shows VAD method schematically. In Fig. 4, minute glass particles 4 of SiO₂ formed in oxy-hydrogen flame are deposited on a quartz rod 5 mounted on a distal end of a rotating quartz bar 3 so as to make cylindrical porous preform and the porous preform is sintered so as to produce transparent preform of the optical fiber. The quartz bar 3 and the quartz rod 5 act as the starting member.

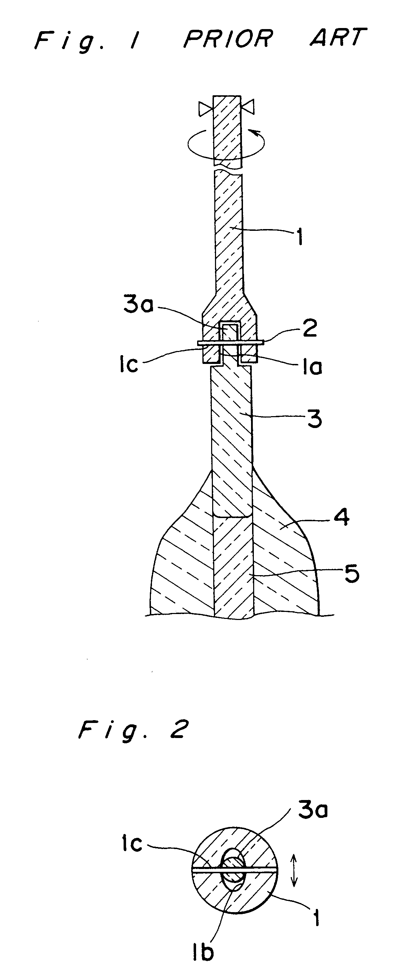

Fig. 1 is a longitudinal sectional view showing a connecting portion between the quartz bar 3 and a rotary shaft 1 in a prior art apparatus, while Fig. 3 is a cross-sectional view of the connecting portion in the prior art apparatus. As shown in Figs. 1 and 3, a cylindrical projection 3a is provided at an upper end of the quartz bar 3, while a cylindrical slot 1a for receiving the cylindrical projection 3a is formed at a lower end of the rotary shaft 1. A pin hole 1c further extends through a lower end portion of the rotary shaft 1 across the cylindrical slot 1a. After the cylindrical projection 3a of the quartz bar 3 has been fitted into the cylindrical slot 1a of the rotary shaft 1, the projection 3a is coupled with the rotary shaft 1 by driving a pin 2 into the pin hole 1c of the rotary shaft 1 through the projection 3a. In the prior art apparatus, a clearance between a diameter of the slot 1a and a diameter of the projection 3a is set at about 0.1 mm such that run-out of the glass preform at the time of rotation of the rotary shaft 1 is eliminated.

However, since the prior art apparatus for supporting the glass preform is subjected to thermal deformation due to its long-term use or a pin hole of the projection 3a and the rotary shaft 1 is deformed by weight of the preform, it is impossible to eliminate run-out of the preform.

Meanwhile, if run-out of the preform takes place, heat applied to the porous preform in a furnace becomes nonuniform. As a result, shrinkage speed of the porous preform becomes nonuniform when the porous preform is changed to the glass preform, so that the glass preform is deformed as shown in, for example, Fig. 5. In Fig. 5, the glass perform has not only an effective portion A but a bent ineffective portion B undesirably. This phenomenon is particularly conspicuous in the case where the porous preform is deposited around the quartz rod by outside vapor phase deposition method and is sintered.

An apparatus for producing a fine powder body of glass for optical fiber is disclosed in JP-A-03012336 and comprises a cylindrical pin dummy bar upon which the fine powder body of glass is deposited and grown. A support member for the pin dummy bar has a circular slot for receiving an end of the dummy bar, and both the slot and the dummy bar are provided with a pin hole for an insertion bolt to connect these together.

JP-A-02160636 discloses a structure for supporting a glass matrix and comprises a supporting bar and a starting matrix for the glass matrix which are connected to each other by inserting the cylindrical end of the starting matrix into a cylindrical slot in the support bar and passing a pin through the connection to suspend the support matrix from the supporting bar.

JP-A-62256735 discloses a method for fixing a starting rod for producing the base material of optical fiber. The end of the starting rod is inserted into the hole of a holder and secured thereto by means of an inserting pin passing through the location of connection.

Accordingly, an essential object of the present invention is to provide, with a view to eliminating the above mentioned disadvantages of conventional apparatuses, an apparatus for supporting on a rotary shaft, an article to be heat treated in a heating furnace, e.g., glass preform without incurring run-out of the glass preform.

This object of the present invention is solved by an apparatus having the features of claim 1 or 2.

This object and features of the present invention will become apparent from the following description taken in conjunction with the preferred embodiments thereof with reference to the accompanying drawings, in which:
Fig. 1 is a schematic longitudinal sectional view of a connecting portion between a quartz bar and a rotary shaft in a prior art apparatus for supporting glass preform (already referred to);
Fig. 2 is a cross-sectional view of a connecting portion between a quartz bar and a rotary shaft in an apparatus for supporting glass preform, according to a first embodiment of the present invention;
Fig. 3 is a cross-sectional view of the connecting portion of the prior art apparatus of Fig. 1 (already referred to);
Fig. 4 is a schematic view explanatory of VAD method (already referred to);
Fig. 5 is a view showing bending of the glass preform in the prior art apparatus of Fig. 1;
Figs. 6a to 6d are cross-sectional views showing clearance between a projection of the quartz bar and a slot of the rotary shaft in the apparatus of Fig. 2 and comparative examples;
Fig. 7 is a perspective view of a rotary shaft employed in an apparatus according to a second embodiment of the present invention;
Fig. 8 is a cross-sectional view of the apparatus of Fig. 7; and
Fig. 9 is a perspective view of a platelike projection of a quartz bar which is one of the examples employed in the apparatus of Fig. 7.

Before the description of the present invention proceeds, it is to be noted that like parts are designated by like reference numerals throughout several views of the accompanying drawings.

### DETAILED DESCRIPTION OF THE INVENTION

The present inventors studied causes of run-out of glass preform in a known heating furnace. The study revealed that the known heating furnace has a structure shown in Fig. 1 in which a gravitational force of the glass preform prevents the glass preform to move in an axial direction of a pin 2 for fixing a quartz bar 3 to a rotary shaft 1 but the glass preform is readily moved in a direction perpendicular to the axial direction of the pin 2 so as to be rotated about the pin 2. The quartz bar 3 and a quartz rod 5 attached to the quartz bar 3 acts as a starting member. Therefore, if clearance between a projection of the quartz bar 3 and a slot of the rotary shaft 1 is small, the projection strikes a peripheral surface of the slot repeatedly, thereby resulting in run-out of the glass preform.

Then, the present inventors examined run-out of the glass preform by changing clearance between the projection and the slot variously as shown in Table 1 below.

**Table 1**

| Type | Dia. of projection (3a) (mm) | Clearance (mm) | | Cross section | Run-out |
|---|---|---|---|---|---|
| | | a | b | | |
| I | 18.0 | 0.25 | 0.25 | Fig. 6a | Run-out occurs with clattering sounds. |
| II | 18.0 | 0.1 | 0.1 | Fig. 6b | Run-out occurs more intensely with clattering sounds. |
| III | 18.0 | 0.2 | 0.4 | Fig. 6c | No run-out occurs. |
| IV | 14.0 | 2.2 | 2.4 | Fig. 6d | Large run-out occurs. |

In Table 1 above, character a denotes an axial direction of the pin 2, while character b denotes a direction perpendicular to the axial direction of the pin 2. Initially, types I and II in which a cylindrical projection 3a is fitted into a cylindrical slot 1a as shown in Fig. 3 are compared. In the type I having a clearance of 0.25 mm, run-out occurs with clattering sounds. Meanwhile, in the type II having a clearance of 0.1 mm, amount of run-out is larger than that of the type I.

On the other hand, in the case where the cylindrical projection 3a is fitted into a slot 1b having an elliptical cross section and a pin hole 1c extends along a minor axis of the elliptical slot 1b as shown in Fig. 2, large run-out occurs in a type IV having a clearance of 2.2 mm in the axial direction of the pin 2 because it is difficult to fix the cylindrical projection 3a at the center of the elliptical slot 1b in the type IV. However, in a type III in which a clearance in the axial direction of the pin 2 is set to 0.2 mm and a clearance in the direction perpendicular to the axial direction of the pin 2 is set to 0.4 mm, the cylindrical projection can be fixed at the center of the elliptical slot 1b and no obstacle is present in the direction perpendicular to the axial direction of the pin 2, so that substantially no run-out occurs.

Based on the above results, the present invention employs the cylindrical projection 3a and the elliptical slot 1b and sets clearances in the axial direction of the pin 2 and in the direction perpendicular to the axial direction of the pin 2 to not more than 0.2 mm and not less than 0.4 mm, respectively such that not only run-out of the glass preform at the time of its rotation is eliminated but bending of the sintered glass preform is prevented.

Therefore, in an apparatus for supporting a glass article, according to a first embodiment of the present invention, the single pin hole 1c is formed in the direction of the minor axis of the elliptical slot 1b so as to not only eliminate run-out of the glass preform but prevent bending of the glass preform. This is because if the clearance in the direction perpendicular to the axial direction of the pin hole is small in contrast with the present invention, the projection moves in the direction perpendicular to the axial direction of the pin hole during the rotation and comes into contact with the slot, thus resulting in run-out and bending of the glass preform.

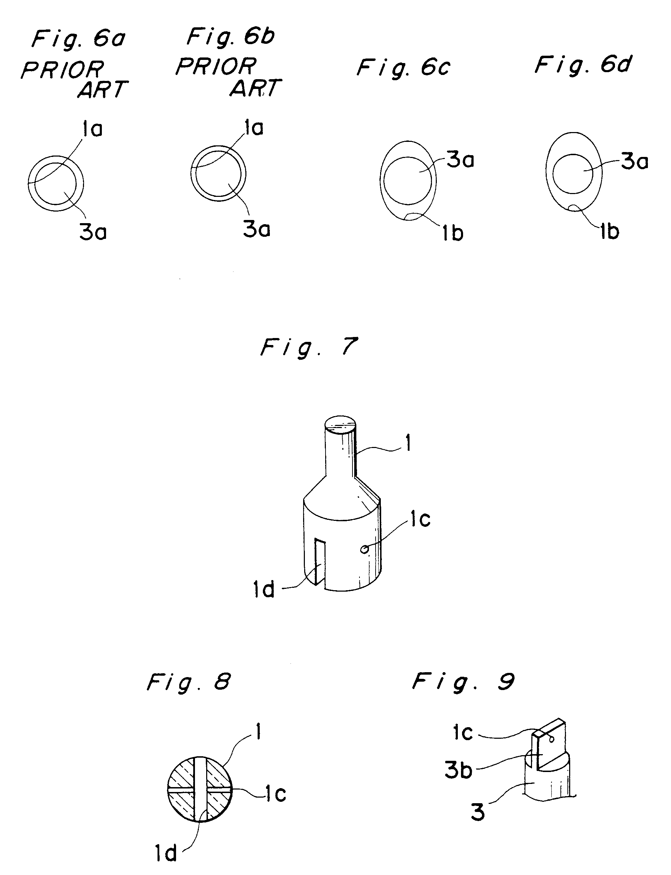

Figs. 7 to 9 show an apparatus for supporting a glass article, according to a second embodiment of the present invention. In Figs. 7 and 8, an elongated slot 1d is formed on the bottom end of the rotary shaft 1 so as to open at opposite sides of the rotary shaft 1. Meanwhile, the quartz bar 3 is formed, on its top end, with the cylindrical projection 3a as shown in Fig. 2 or a platelike projection 3b as shown in Fig. 9. Furthermore, the pin hole 1c extends in a direction perpendicular to the longitudinal direction of the elongated slot 1d. By the above described arrangement of the apparatus, run-out of the glass preform can be eliminated in the same manner as in the apparatus of Fig. 2.

Hereinbelow, concrete examples of the apparatus of the present invention are described together with comparative examples.

### [Example 1]

This example 1 corresponds to the type III of Table 1. A quartz rod of 15 mm in diameter is attached to a lower end of a quartz starting member of 18.5 mm in diameter and a cylindrical projection of 18.0 mm in diameter is provided at an upper end of the starting member. Then, porous preform is deposited around the quartz rod to a thickness of 140 mm over a distance of 500 mm. The cylindrical projection of the starting member is fitted into an elliptical slot formed at a lower end of a quartz rotary shaft and then, the starting member is secured to the rotary shaft by a pin. The elliptical slot has a major diameter of 18.8 mm and a minor diameter of 18.4 mm. Then, the porous preform is inserted into a heating furnace heated to 1600 °C and is changed to transparent glass in atmosphere of 100 % of helium. As a result, the sintered material is not subjected to bending at all and excellent preform can be obtained over a distance of 400 mm.

### [Example 2]

This example 2 corresponds to the apparatus of Fig. 7. A quartz rod of 15 mm in diameter is fixed to a lower end of a quartz starting member of 18.5 mm in diameter and a cylindrical projection of 18.0 mm in diameter is formed at an upper end of the starting member. Subsequently, porous preform is deposited around the quartz rod to a thickness of 140 mm over a distance of 500 mm. The cylindrical projection of the starting member is fitted into an elongated slot formed at a lower end of a quartz rotary shaft and then, the starting member is fixed to the rotary shaft by a pin. The elongated slot has a width of 18.2 mm.

Thereafter, when the porous preform is inserted into a heating furnace heated to 1600 °C and is changed to transparent glass in atmosphere of 100 % of helium, the sintered material is not bent at all and excellent preform can be obtained over a distance of 400 mm.

### (Comparative example 1)

This comparative example 1 corresponds to the type 1 of Table 1. A quartz rod of 15 mm in diameter is fixed to a lower end of a quartz starting member of 18.5 mm in diameter. A cylindrical projection of 18.0 mm in diameter is provided at an upper end of the starting member. Meanwhile, a circular slot of 18.5 mm in diameter is formed at a lower end of a quartz rotary shaft such that a clearance of 0.25 mm is defined between the cylindrical projection and the circular slot. After the cylindrical projection has been fitted into the circular slot, the starting member is secured to the rotary shaft by a pin. Subsequently, transparent glass is produced under the same conditions as those of the examples 1 and 2. As a result, bending of the sintered material is produced and thus, the bent portion of 50 mm in length is required to be discarded.

### (Comparative example 2)

This comparative example 2 corresponds to the type II of Table 1, in which clearance between the cylindrical projection and the circular slot is set to 0.1 mm in the above comparative example I. When the sintered material is produced in the same manner as in the comparative example 1, a lower portion of 90 mm in length should be discarded from the sintered material.

As is clear from the foregoing description, since run-out of the glass preform can be prevented by the above described arrangement of the apparatus of the present invention and thus, excellent sintered material free from bending can be obtained.

## Claims

1. An apparatus for suspending from a quartz rotary shaft, a glass preform to be heat treated in a heating furnace, so as to support the glass preform, comprising:
a slot formed at the lower end of the rotary shaft for receiving a projection formed at the upper end of the glass preform; and
a pin hole formed in the rotary shaft and through the slot for securing the glass preform to the rotary shaft;
**characterised in that:**
the slot has an elliptical cross-section for receiving a cylindrical projection of said preform and the pin hole is formed along a minor axis of the slot, and wherein a clearance between a peripheral surface of the slot and that of the cylindrical projection along the minor axis of the slot is set to not more than 0.2 mm, while a clearance between the peripheral surface of the slot and that of the cylindrical projection along a major axis of the slot is set to not less than 0.4 mm.

2. An apparatus for suspending from a quartz rotary shaft, a glass preform to be heat treated in a heating furnace, so as to support the glass preform, comprising:
a slot formed at the lower end of the rotary shaft for receiving a projection formed at the upper end of the glass preform; and
a pin hole formed in the rotary shaft and through the slot for securing the glass preform to the rotary shaft;
**characterised in that:**
the slot is elongated and open at both sides of the rotary shaft for receiving a cylindrical projection or a platelike projection of said preform and the pin hole is formed in a direction perpendicular to the longitudinal direction of the elongated slot, and wherein a clearance between each of opposite faces of the elongated slot and a peripheral surface of the cylindrical projection or a corresponding one of opposite faces of the platelike projection of the glass preform is set to be not more than 0.2 mm.

## Patentansprüche

1. Vorrichtung zum Abhängen eines in einem Heizofen wärmezubehandelnden Glasvorformlings von einer rotierenden Quarzwelle, um so den Glasvorformling zu tragen, mit:
einem an dem unteren Ende der rotierenden Welle ausgebildeten Schlitz zur Aufnahme eines am oberen Ende des Glasvorformlings ausgebildeten Vorsprungs; und
einem Stiftloch, welches in der rotierenden Welle und durch den Schlitz hindurchgehend ausgebildet ist, um den Glasvorformling an der rotierenden Welle zu befestigen;
dadurch **gekennzeichnet,**
daß der Schlitz einen elliptischen Querschnitt zur Aufnahme eines zylindrischen Vorsprungs des Vorformlings aufweist und daß das Stiftloch entlang einer kleineren Achse des Schlitzes ausgebildet ist, und wobei ein Spiel zwischen einer Umfangsfläche des Schlitzes und der des zylindrischen Vorsprungs entlang der kleineren Achse des Schlitzes auf nicht mehr als 0,2 mm festgelegt ist, während ein Spiel zwischen der Umfangsfläche des Schlitzes und der des zylindrischen Vorsprungs entlang einer größeren Achse des Schlitzes auf nicht weniger als 0,4 mm festgelegt ist.

2. Vorrichtung zum Abhängen eines in einem Heizofen wärmezubehandelnden Glasvorformlings von einer rotierenden Quarzwelle, um so den Glasvorformling zu tragen, mit:
einem an dem unteren Ende der rotierenden Welle ausgebildeten Schlitz zur Aufnahme eines am oberen Ende des Glasvorformlings ausgebildeten Vorsprungs; und
einem Stiftloch, welches in der rotierenden Welle und durch den Schlitz hindurchgehend ausgebildet ist, um den Glasvorformling an der rotierenden Welle zu befestigen;
dadurch **gekennzeichnet,**
daß der Schlitz länglich ist und an beiden Seiten der rotierenden Welle zur Aufnahme eines zylindrischen Vorsprungs oder eines plattenartigen Vorsprungs des Vorformlings offen ist und daß das Stiftloch in einer Richtung rechtwinklig zur Längsrichtung des länglichen Schlitzes ausgebildet ist, und wobei ein Spiel zwischen jeder der einander gegenübergelegenen Seiten des länglichen Schlitzes und einer Umfangsfläche des zylindrischen Vorsprungs oder einer entsprechenden gegenüberliegenden Fläche des plattenartigen Vorsprungs des Glasvorformlings auf nicht mehr als 0,2 mm festgelegt ist.

## Revendications

1. Appareil pour suspendre à un arbre rotatif en quartz une préforme de verte qui doit être traitée dans un four de chauffage, de manière à supporter la préforme de verte, comprenant : une fente formée à l'extrémité inférieure de l'arbre rotatif afin de recevoir une projection formée à l'extrémité supérieure de la préforme de verre ; et un trou de goupille formé dans l'arbre rotatif et à travers la fente pour fixer la préforme de verte à l'arbre rotatif ;
caractérisé en ce que : la fente a une section transversale elliptique afin de recevoir une projection cylindrique de ladite préforme, et le trou de goupille est formé le long d'un petit axe de la fente, et en ce qu'un jeu entre une surface périphérique de la fente et la surface périphérique de la projection cylindrique le long du petit axe de la fente est fixé à une valeur qui n'est pas supérieure à 0,2 mm, tandis qu'un jeu entre la surface périphérique de la fente et la surface périphérique de la projection cylindrique le long d'un axe principal de la fente est fixé à une valeur qui n'est pas inférieure à 0,4 mm.

2. Appareil pour suspendre à un arbre rotatif en quartz une préforme de verre qui doit être traitée thermiquement dans un four de chauffage, de manière à supporter la préforme de verre, comprenant : une fente formée à l'extrémité inférieure de l'arbre rotatif afin de recevoir une projection formée à l'extrémité supérieure de la préforme de verte ; et un trou de goupille formé dans l'arbre rotatif et à travers la fente pour fixer la préforme de verre à l'arbre rotatif :
caractérisé en ce que : la fente est allongée et s'ouvre des deux côtés de l'arbre rotatif afin de recevoir une projection cylindrique ou une projection en forme de plaque de ladite préforme, et en ce que le trou de goupille est formé dans une direction perpendiculaire à la direction longitudinale de la fente allongée, et en ce qu'un jeu entre chacune des faces opposées de la fente allongée et une surface périphérique de la projection cylindrique, ou une face correspondante des faces opposées de la projection en forme de plaque de la préforme de verre, est fixé à une valeur qui n'est pas supérieure à 0,2 mm.
